# FASCICULE DE BREVET EUROPEEN

(11) **EP 1 849 983 B1**
(45) Date de publication et mention de la délivrance du brevet: **11.03.2009**
(21) Numéro de dépôt: 07290514.4
(22) Date de dépôt: 25.04.2007
(51) Int. Cl.: F02K 1/40, B64D 33/04, F02K 1/28

(54) **Ensemble d'échappement des gaz de propulsion d' un aéronef formant un coude**
Anordnung zum Ausstoßen von Treibgasen in einem Luftfahrzeug, die einen Bogen bildet
Elbow-shaped propelling gas exhaust assembly in an aircraft

(30) Priorité: 28.04.2006 FR 0651543
(43) Date de publication de la demande: 31.10.2007
(73) Titulaire: SNECMA, 75015 Paris (FR)
(72) Inventeur: Daris, Thomas, 75012 Paris (FR); Page, Alain Pierre, 91230 Montgeron (FR); Prouteau, Jackie Raymond Julien, 94440 Villecresnes (FR); Brunet, Edgar, 92200 Neuilly sur Seine (FR)
(74) Mandataire: David, Daniel

(56) Documents cités:
- GB-A- 2 044 359
- US-A- 3 981 448
- US-A- 4 215 537
- US-A- 5 170 964
- US-A- 5 699 662
- US-A- 6 112 513
- US-A1- 2002 189 232

## Description

L'invention se rapporte au domaine de la propulsion des aéronefs par éjection de flux gazeux, et concerne l'ensemble d'échappement en aval du générateur de gaz jusqu'à la tuyère.

Pour des avions propulsés par des turboréacteurs, avec pilote ou sans pilote, les drones, à applications militaires, un objectif est la furtivité.

La furtivité est définie notamment par rapport à deux paramètres : la surface équivalent radar (SER) et la signature infrarouge (SIR). La SER est la surface susceptible d'apparaître sur un radar, compte tenu de la géométrie de l'aéronef. La SIR est la signature en chaleur que laisse l'aéronef, notamment au niveau de ses tuyères d'éjection.

Pour réduire cette signature en chaleur, voire la supprimer, il est connu de masquer le rayonnement infrarouge émis par les gaz chauds issus du générateur de gaz. On connaît par exemple le brevet US 3.693.880 qui décrit un dispositif de ce type. Il comprend un écran en forme de corps de révolution placé dans le canal d'échappement des gaz tout en étant espacé des parois de ce dernier et maintenu par des bras radiaux. Il a une forme aérodynamique guidant au mieux les gaz le long de son profil ovoïdal et sa surface est refroidie par de l'air plus froid acheminé par les bras radiaux. Le conduit cylindrique devient annulaire entre l'écran et la paroi du conduit. L'écoulement redevient cylindrique en aval de l'écran pour être évacué par une tuyère. Le diamètre du conduit s'élargit à cet endroit et suit un profil axial parallèle à celui de l'écran pour conserver une ouverture suffisante. Le diamètre maximal de l'écran est suffisant pour masquer la turbine en vue depuis l'arrière. En outre la partie aval de l'écran est à double paroi parcourue par l'air de refroidissement pour en éviter tout échauffement.

Le présent déposant a développé par ailleurs une tuyère double, dite bifide, dans laquelle le flux de gaz issu du moyen de génération de gaz est divisé en deux flux et guidé jusque vers deux tuyères. Les deux flux d'égale importance sont éjectés en parallèle dans l'axe de la poussée. L'avantage de cette disposition est de permettre le guidage de l'aéronef, notamment en lacet par un contrôle des deux flux soit par orientation de leur vecteur poussée soit par les débits. En étant écartés l'un de l'autre, ils se retrouvent aussi décalés par rapport à l'axe du générateur. De cette façon, dans le cas où le moyen générateur de gaz comprend une turbine, celle-ci est susceptible de ne pas être visible de l'arrière à travers l'ouverture des tuyères. La signature infrarouge est donc faible.

La présente invention vise un dispositif d'échappement dont la signature infrarouge est encore réduite par rapport à la solution précédente.

L'invention parvient à réaliser cet objectif avec un ensemble d'échappement des gaz de propulsion, dans un aéronef propulsé par des gaz chauds produits dans l'axe de celui-ci par un générateur de gaz, notamment un moteur à turbine à gaz, comprenant un conduit et une tuyère, caractérisé par le fait que ledit conduit forme un coude vertical défini par une première partie guidant le flux gazeux dans une direction radiale du plan vertical s'éloignant de l'axe de l'aéronef et une deuxième partie en aval de la première partie guidant le flux gazeux dans une direction radiale vers le dit axe, en aval du coude le flux gazeux étant ramené dans l'axe et dont l'axe de la tuyère est parallèle, notamment coaxial, à celui du flux de gaz en sortie du générateur de gaz, les éléments du conduit en amont du coude n'étant pas visibles depuis l'arrière.

Dans la présente demande, le terme coude est compris de la façon suivante. Le conduit comprend une première partie guidant le flux gazeux dans une direction radiale s'éloignant de l'axe et une deuxième partie en aval de la première guidant le flux gazeux dans une direction radiale vers l'axe. En aval du coude le flux est ramené dans l'axe.

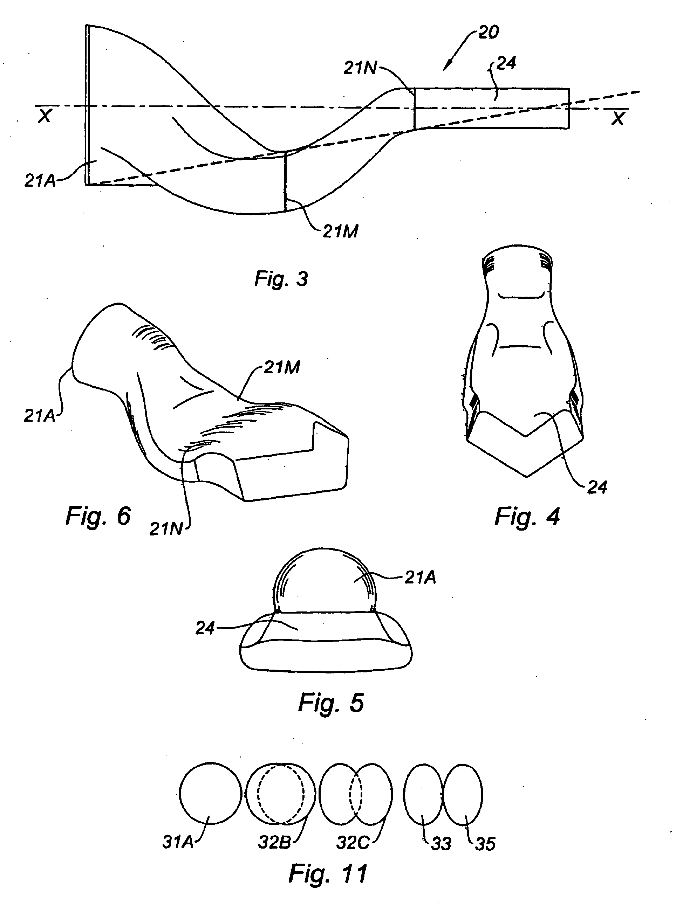

Le brevet US 3981448 décrit un ensemble d'échappement de gaz de propulsion, dans un aéronef propulsé par des gaz chauds produits dans l'axe de celui-ci par un générateur de gaz, comprenant un conduit vertical, voir figure 5 défini par une première partie guidant le flux gazeux dans une direction radiale du plan vertical s'éloignant de l'axe. Il ne prévoit pas cependant la déviation du flux dans l'axe de l' aéronef.

Selon un mode de réalisation avantageux, la section transversale du conduit sur une partie de sa longueur est de forme allongée dans le sens travers.

Plus particulièrement, le conduit comprend un plan d'entrée transversal et la tuyère un plan de col distant du plan d'entrée d'une longueur Lcanal, et le plan transversal du coude, au niveau de l'écartement vertical maximal est situé à une distance du plan d'entrée Lcoude tel que le rapport Lcoude/Lcanal est compris entre 0,5 et 0,7 ; et/ou la hauteur Hint de la paroi interne, et la hauteur Hext de la paroi externe du coude par rapport à l'axe du flux gazeux, correspondant au niveau de l'écartement vertical maximal, sont dans un rapport Hint/Hext <= 1/2. Conformément à une autre caractéristique le rapport Hext/Lcanal est d'environ 1/3.

On a constaté avec surprise qu'en coudant verticalement vers le haut ou vers le bas le flux gazeux de cette façon on pouvait masquer efficacement non seulement le disque de turbine mais aussi les parties les plus chaudes en aval de celle-ci. Par ailleurs ce concept permet aussi de concevoir une géométrie de conduit minimisant les pertes de charge aérodynamique tout en favorisant le mélange des gaz avant éjection.

On améliore encore le masquage au rayonnement infrarouge en divisant le flux en deux flux distants transversalement l'un de l'autre. Ainsi conformément à une autre caractéristique le conduit comprend un élément de zone de transition communiquant vers l'aval avec deux éléments de conduit débouchant chacun dans une demi tuyère.

L'invention porte également sur la capacité de guidage fournie par ce dernier type d'échappement. On a appliqué la solution décrite dans la demande de brevet déposée par le présent demandeur sous le numéro FR 0551857.En effet dans le cas d'une tuyère telle que destinée à équiper un drone militaire, on associe un objectif de discrétion SIR et SER au besoin de poussée vectorielle. On est conduit à concevoir des tuyères bidimensionnelles très aplaties, avec un allongement de l'ordre de 5 pour les discrétions SIR et SER et avec une forme extérieure pointue pour la discrétion en SER.

La présente invention a également pour objectif la réalisation d'un dispositif de pilotage d'un aéronef, notamment en lacet, qui soit efficace et associé à une maîtrise du débit moteur.

Ce dispositif doit être applicable aux aéronefs monomoteur ou bimoteurs et en particulier aux drones.

Ce dispositif doit être capable d'assurer en continu une vectorisation de faible amplitude sans entraîner une pénalisation des performances du générateur de gaz.

Il doit être capable de fournir une poussée vectorielle importante pour les besoins de pilotage de l'aéronef.

Il doit être capable de limiter la SIR en secteur arrière et travers.

Ainsi conformément à une autre caractéristique l'ensemble d'échappement est conformé de manière à diviser le flux principal de gaz de propulsion en un premier et un second flux pour une éjection dans une première et une seconde demi tuyères et comporte au moins l'un des deux moyens de pilotage suivants : moyen de répartition du flux principal dans chacune des deux demi tuyères et moyen d'orientation du vecteur de poussée produite par chacune des deux demi tuyères.

Par demi tuyère, on comprend dans la présente demande une tuyère d'éjection des gaz qui reçoit une partie du flux principal en aval de la turbine. Ce terme n'est pas associé à une forme particulière. On profite de la solution à deux flux pour contrôler séparément les deux demi vecteurs de poussée en module et en orientation.

Avantageusement, au moins l'un des dits deux moyens, de préférence les deux, sont à injection fluidique et de préférence encore l'ensemble d'échappement comporte les dits deux moyens. Cette solution présente l'avantage d'être simple et de fonctionner avec un nombre réduit de dispositifs d'injection fluidique, assurant une fiabilité élevée et un coût faible. Cependant les moyens de contrôle des deux flux peuvent être mécaniques.

Selon un mode de réalisation particulier, le flux principal est généré par deux générateurs de gaz, et comprend un moyen d'orientation du vecteur de poussée produit par chacune des deux demi tuyères.

En premier lieu, les dites demi tuyères sont disposées pour une orientation du vecteur poussée en lacet. On palle ainsi l'absence de dérive.

Selon une variante, les dites demi tuyères sont disposées pour un pilotage en tangage ou en roulis ou encore la tuyère comprend deux paires de demi tuyères par exemple l'une pour l'orientation en lacet l'autre pour l'orientation en tangage. D'autres dispositions ou combinaisons sont possibles.

Conformément à une autre caractéristique, le moyen de pilotage de la répartition des flux comprend des moyens d'injection de fluide au col de chacune des demi tuyères. Plus précisément, le générateur de gaz étant un turboréacteur, les moyens d'injection fluidiques sont alimentés par de l'air pouvant être prélevé au compresseur du générateur. Cette solution est particulièrement avantageuse car elle permet un fonctionnement équilibré dans toutes les phases de vol. Notamment on prévoit un procédé de fonctionnement de tuyère selon lequel on prélève en continu de l'air au compresseur du générateur.

Conformément à une variante de réalisation, le flux principal est généré par deux générateurs de gaz. Dans ce cas l'ensemble d'échappement comprend, de préférence, seulement un moyen d'orientation du vecteur de poussée produit par chacune des deux demi tuyères.

On décrit maintenant l'invention plus en détail en référence aux dessins annexés sur lesquels
La figure 1 montre en vue de dessus un exemple d'aéronef auquel s'applique l'invention ;
La figure 2 montre en vue de dessus une tuyère de type bifide telle que décrite dans la demande FR 05 51 857;
La figure 3 montre en vue de côté un ensemble d'échappement conforme à un premier mode de réalisation de l'invention ;
Les figures 4 à 6 montrent l'ensemble de la figure 3 vu respectivement de dessus, arrière et en perspective de trois quart arrière ;
La figure 7 montre en vue de dessus un ensemble d'échappement conforme à un deuxième mode de réalisation de l'invention ;
Les figures 8 à 10 montrent l'ensemble de la figure 7 vu respectivement de profil, arrière et en perspective de trois quart arrière ;
La figure 11 montre les différentes formes de la section transversale de l'élément de conduit de transition en progressant le long de l'axe vers l'aval ;
La figure 12 est une représentation schématique de la disposition des moyens de pilotage de l'invention dans une demi tuyère ;
La figure 13 illustre le fonctionnement des moyens de pilotage disposés au col ;
La figure 14 illustre le fonctionnement des moyens de pilotage disposés dans le divergent des demi tuyères.

L'aéronef 1 représenté sur la figure est un exemple non limitatif. Il a un nez 2 deux ailes 3 et 4 et est propulsé par un ou deux turboréacteurs non visibles. Il est conformé de manière à présenter des SER et SIR aussi faibles que possible. Sa partie arrière en particulier ne comprend pas de dérive verticale et se termine par une pointe 5 avec un angle au sommet adapté, par exemple de 40°, pour rejeter les ondes radars vers l'infini. L'ensemble d'échappement 10 tire partie de cette contrainte en étant bifide. Elle répartit le flux principal issu du canal 12 en entrée en deux flux dans deux canaux symétriques 12A et 12B qui se terminent par deux demi tuyères 14 et 16 à section rectangulaire. Les canaux 12, 12A et 12B ont une forme adaptée pour assurer la séparation de l'écoulement en deux flux mais aussi la transition d'une forme cylindrique à section circulaire ou sensiblement circulaire à une forme à section rectangulaire.

Selon la présente demande, on perfectionne la forme de l'ensemble d'échappement de manière à assurer le masquage du bloc de turbine quelle que soit la position d'un observateur arrière.

En se reportant aux figures 3 à 6, on voit la géométrie de l'ensemble d'échappement 20 conforme à l'invention.

Cet ensemble comprend un conduit 21 avec un élément tubulaire d'entrée21A, côté générateur de gaz, et relié à une tuyère 24. L'axe de la tuyère est celui XX du flux de gaz en sortie de turbine.

L'élément tubulaire d'entrée 21A est en communication directe avec la sortie de turbine du moteur. Comme on le voit sur la figure 11 sa section est de préférence circulaire. Elle peut cependant être différente.

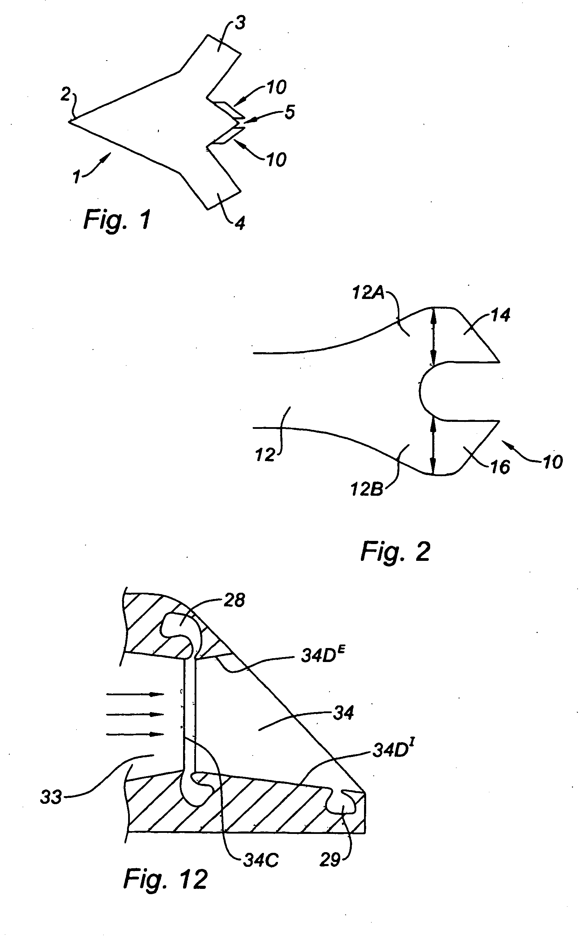

En se déplaçant axialement vers l'aval par rapport à l'écoulement des gaz, le conduit forme un coude. Le conduit s'écarte de l'axe dans le sens vertical, ici vers le bas, et dévie le flux gazeux radialement vers l'extérieur jusqu'à un écartement maximal par rapport à l'axe en 21M où le flux devient axial. Il se rapproche ensuite de l'axe en déviant le flux radialement vers l'axe jusqu'en 21N où il est ramené dans l'axe XX. Le conduit se termine par la tuyère 24 divergente en aval du col qui se situe dans cet exemple au niveau du plan 21N. Elle est ici à section rectangulaire mais d'autres formes sont possibles. Selon le mode de réalisation illustré, la tuyère comprend deux parois horizontales parallèles entre elles formant chacune une pointe. Ce type d'échappement est adapté pour s'intégrer à un aéronef tel que celui présenté sur la figure 1 visant la discrétion SER en plus de la discrétion SIR par le coude du conduit.

La forme du conduit évolue depuis le plan d'entrée vers l'aval progressivement en s'élargissant dans le sens travers tout en diminuant de hauteur jusqu'au niveau bas du coude qui est la section la plus éloignée transversalement de l'axe. Puis la forme de la section transversale du conduit 21 évolue progressivement vers l'aval jusqu'à avoir la forme de la tuyère. Les aires sont déterminées selon les contraintes de la dynamique des fluides.

De préférence l'ensemble présente au moins l'une des relations dimensionnelles suivantes :
Lcoude/Lcanal est compris entre 0,5 et 0,7 ;
Hint/Hext >= 1/2 ;
Hext/Lcanal = 1/3 environ ;
On en déduit le rapport Hint/Lcanal ; il est proche de 1/6 ;
Où
Lcoude est la longueur mesurée axialement vers l'aval depuis le plan d'entrée de l'élément tubulaire 21A jusqu'au niveau 21M où le coude atteint l'écartement vertical maximal ;
Lcanal est la longueur mesurée axialement vers l'aval depuis le plan d'entrée de l'élément tubulaire 21A jusqu'au col de la tuyère au niveau 21N ;
Hint est la hauteur du coude mesurée transversalement depuis l'axe XX jusqu'à la paroi interne du conduit 21, au niveau 21M où le coude atteint l'écartement vertical maximal ;
Hext est la hauteur du coude mesurée transversalement depuis l'axe XX jusqu'à la paroi externe du conduit 21, au niveau 21M où le coude atteint l'écartement vertical maximal.

Comme cela est illustré par la droite D1, une telle géométrie permet un masquage efficace des zones chaudes du moteur. La droite D1 constitue une des limites de visibilité des zones chaudes.

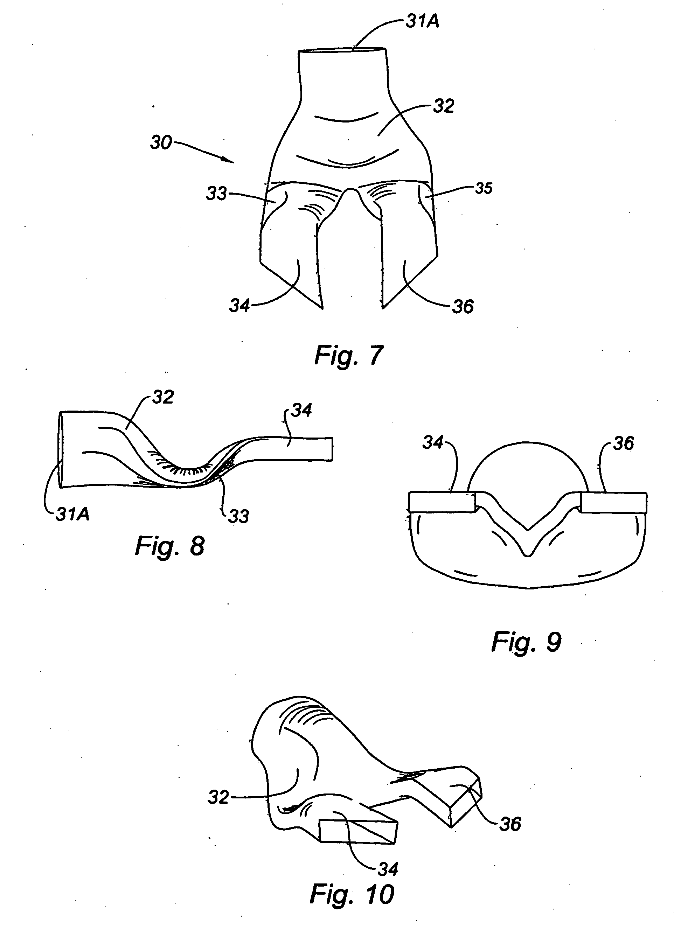

On décrit maintenant la variante qui est illustrée par les figures 7 à 10. Selon ce mode de réalisation, on combine la formation d'un coude vertical selon l'invention et la division du flux en deux flux distincts dans un ensemble d'échappement de type bifide.

Le conduit de l'ensemble d'échappement 30 comprend un premier élément de conduit cylindrique 31 avec un plan 31A d'entrée des gaz issus du générateur de gaz. Ce premier élément de conduit 31 est dans l'axe du flux gazeux et est de section transversale, notamment circulaire, se raccordant au générateur de gaz non représenté. En aval, l'élément de conduit 31 se prolonge par un deuxième élément de conduit 32. La section transversale de cet élément 32 évolue progressivement depuis la forme circulaire de l'élément 31, jusqu'à une forme allongée transversalement et de hauteur réduite, avec une amorce de séparation en deux canaux. Avantageusement cette amorce de séparation prend le contour de deux ellipses identiques qui se chevauchent et dont le grand axe est horizontal dans le même plan. Les deux ellipses s'écartent progressivement l'une de l'autre comme on le voit en 32B et 32C sur la figure 11. En fin de transition, on a deux troisièmes éléments de conduit 33 et35 distincts à sections ici de forme elliptique. Les deux éléments de conduit 33 et 35 débouchent chacun dans une demi tuyère 34, 36 respectivement. Ces deux demi tuyères sont dans un même plan horizontal, au même niveau que l'axe de la section d'entrée 31A. Leur écartement dans le plan horizontal est par exemple de l'ordre du diamètre de la section d'entrée 31A. Les deux demi tuyères ont dans ce mode de réalisation une section de forme rectangulaire. La section des deux éléments de conduit 33 et 35 évolue depuis la forme en ellipse de la figure 11 jusqu'à celle des tuyères, toujours en conservant des aires déterminés par les contraintes de la dynamique des fluides. Les deux demi tuyères ont une forme aval en biseau avec la paroi supérieure et la paroi inférieure parallèles entre elles, une paroi interne, proche de l'axe XX, plus longue que la paroi verticale externe. Les deux parois verticales forment un divergent.

La partie de l'ensemble d'échappement constituée par le deuxième élément de conduit 32 et les deux troisièmes éléments de conduit 33 et 35 forme un coude qui vu de profil est avantageusement défini par les mêmes paramètres que le premier mode de réalisation ci-dessus. Le profil de l'ensemble 30 représenté sur la figure 8 est le même que celui de l'ensemble 30 représenté sur la figure 3 La section de cette partie au niveau de l'écartement transversal maximal par rapport à l'axe du flux gazeux est située soit dans le deuxième élément de conduit 32, de transition, soit dans les deux troisièmes éléments de conduit 33 et 35.

On décrit maintenant le moyen de guidage en lacet de l'aéronef en référence aux figures 12, 13 et 14. Dans cet exemple chacune des demi tuyères est constituée d'un col rectangulaire, 34C et 36C respectivement, d'allongement horizontal, rapport largeur/hauteur, élevé. L'allongement des tuyères peut être de 2,5. En aval du col, le divergent est formé des deux parois verticales. Il est court du côté externe 34D^{E} (36D^{E}.non représenté). Les parois verticales du côté interne 34D^{I} (36D^{I} non représenté) sont plus longues. Cela donne une forme en biseau du bord aval des tuyères, 34 et 36. Les parois supérieures et inférieures sont soit parallèles entre elles soit divergentes.

L'ensemble est de préférence optimisé pour assurer, dans les cas sans injection et sans vectorisation, une poussée transversale de chaque demi tuyère minimale. En effet celle-ci se traduit par une perte de poussée axiale qu'il faut réduire à un minimum. La poussée latérale globale reste nulle en raison de la symétrie du système.

Conformément à une caractéristique de l'invention pour assurer le guidage de l'aéronef 1 sans empennage, on prévoit des moyens de pilotage par lesquels on agit sur les deux flux. Ces moyens de pilotage peuvent être mécaniques ou fluidiques. Dans cet exemple, ils sont fluidiques.

La tuyère convergente divergente 34 de la figure 12 comprend le col 34C et en aval les deux parois divergentes 34D^{I} et 34D^{E}. La tuyère comprend ici un injecteur de fluide 28 disposé sur une paroi au niveau du col et un injecteur de fluide 29 situé sur la paroi 34D^{I} du divergent. L'injecteur 29 est de préférence situé près de l'extrémité du divergent.

De façon symétrique la demi tuyère 36 est équipée d'un injecteur de fluide 28 au col 36C et d'un injecteur de fluide 29 sur la paroi de divergent 36D^{I}

Les injecteurs 28 et 29 sont alimentés avantageusement par de l'air prélevé au compresseur du turboréacteur qui fournit le flux principal, le cas échéant.

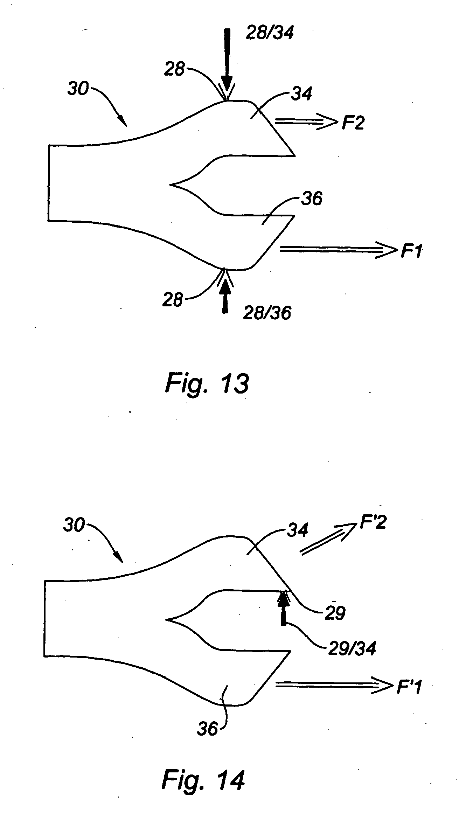

Le fonctionnement est le suivant. On a représenté sur la figure 13 par des flèches 28/34 et 28/36 les injections d'air par les injecteurs 28. Le moment de lacet est créé par le pilotage de la répartition du débit dans chacune des deux demi tuyères 34 et 36 au moyen des injections de fluide aux deux cols. La valeur du débit est illustrée par la longueur de la flèche, et ici une flèche est plus longue que l'autre. Selon cet exemple la demi tuyère 34 reçoit un fort débit injecté 28/34, et par conséquent subit une importante restriction de la section efficace au col. Inversement la demi tuyère 36 reçoit peu ou pas de débit au col. Il en résulte la création d'un différentiel de poussée axiale. La poussée F1 sur la demi tuyère 36 est plus grande que la poussée F2 sur la demi tuyère 34. Il en résulte un moment de lacet.

On observe cependant qu'une obstruction subite de la tuyère créerait instantanément une augmentation de pression dans le canal et un risque de pompage du compresseur. Conformément à un mode préféré de fonctionnement, on crée une injection permanente nominale. Elle est réalisée à iso débit prélevé de telle sorte que le générateur ne subit pas de variation soudaine au cours de la mission tout en régulant la tuyère à iso section efficace au col totale. Le cycle thermodynamique du moteur est directement optimisé sous cette contrainte de prélèvement constant. De cette façon, le système de régulation de l'air prélevé fonctionne de façon continue et ne connaît pas de phase transitoire de démarrage.

Ainsi ce mode de fonctionnement fournit avec un impact faible sur les performances du moteur, un poussée vectorielle qui permet de compenser l'absence d'empennage cellule, notamment pour les régimes de croisières ou transitoires lents.

On décrit maintenant le fonctionnement du dispositif d'injection situé dans le divergent des tuyères 34 et 36 en relation avec la figure 14.

Les injecteurs 29 sont dans ce mode de réalisation disposés de préférence en extrémité de la paroi longue de divergent. En injectant un fluide dans la tuyère 34, dont la direction est représentée par la flèche 29/34, on induit une déviation du vecteur de poussée produite par la tuyère et représenté par la flèche F'2. La poussée F'1 fournie par la demi tuyère 36 reste axiale puisque rien ne vient perturber sa direction. Il s'ensuit la création d'un moment de lacet par rapport au centre de gravité de l'avion. Ce mode de fonctionnement fournit une poussée vectorielle importante pour assurer le pilotage de l'aéronef, au détriment cependant des performances du générateur. Cette détérioration est toutefois maîtrisée.

On a décrit un mode de réalisation de l'invention. Cependant de nombreuses variantes sont possibles sans sortir du cadre de l'invention. Par exemple on a montré un canal alimenté par un seul générateur de gaz. Dans le cas d'un aéronef bimoteur les deux demi flux d'échappement sont générés par deux moteurs distincts dont la régulation est synchronisée. De préférence on utilise les seuls injecteurs dans le divergent.

Des variantes sur la disposition et le fonctionnement des moyens de pilotage, comprennent la présence d'un seul moyen de pilotage. Il est possible de le faire fonctionner en même temps que l'autre moyen ou séparément.

Selon un mode de réalisation non représenté, les tuyères peuvent être de type fluidique avec éjecteur, c'est-à-dire un flux secondaire débouchant dans ou en aval du canal principal.

Les moyens de pilotage selon l'invention peuvent être combinés en partie avec des moyens mécaniques d'orientation des flux.

## Revendications

1. Ensemble d'échappement des gaz de propulsion, dans un aéronef propulsé par des gaz chauds produits dans l'axe (XX) de celui-ci par un générateur de gaz, comprenant un conduit (21 ; 32, 33, 35) et une tuyère (24 ; 34, 36), ledit conduit formant un coude vertical défini par une première partie guidant le flux gazeux dans une direction radiale du plan vertical s'éloignant de l'axe de l'aéronef et une deuxième partie en aval de la première partie guidant le flux gazeux dans une direction radiale vers le dit axe, **caractérisé par le fait qu'**en aval du coude le flux gazeux est ramené dans l'axe, l'axe de la tuyère étant parallèle, notamment coaxial, à celui (XX) du flux de gaz en sortie du générateur de gaz, les éléments du conduit en amont du coude n'étant pas visibles depuis l'arrière.

2. Ensemble selon la revendication précédente dont le générateur de gaz est un turboréacteur.

3. Ensemble selon l'une des revendications précédentes dont la section transversale du conduit (21 ; 32, 33, 35) est de forme allongée et de hauteur réduite.

4. Ensemble selon l'une des revendications précédentes dont le conduit comprend un plan d'entrée (21A; 31A) et la tuyère (24 ; 34, 36) un plan de col, distant du plan d'entrée d'une longueur Lcanal, et le plan du coude, correspondant à la déviation verticale maximale, est situé à une distance du plan d'entrée Lcoude telle que le rapport Lcoude/Lcanal, est compris entre 0,5 et 0,7.

5. Ensemble selon l'une des revendications précédentes dont la hauteur Hint de la paroi interne, et la hauteur Hext de la paroi externe du coude par rapport à l'axe du flux gazeux, correspondant à la déviation verticale maximale, sont dans un rapport Hint/Hext <= 1/2 ;

6. Ensemble selon la revendication 5 dont le rapport Hext/Lcanal est d'environ 1/3.

7. Ensemble selon l'une des revendications précédentes dont le conduit comprend successivement un premier élément de conduit cylindrique (31), un deuxième élément de conduit (32), deux troisièmes éléments de conduit (33, 35), ces derniers débouchant chacun dans une demi tuyère (34, 36).

8. Ensemble selon l'une des revendications précédentes conformé de manière à diviser un flux principal de gaz de propulsion en un premier et un second flux pour une éjection dans une première (34) et une seconde (36) demi tuyères et comportant au moins l'un des deux moyens de pilotage suivants : moyen de répartition du flux principal dans chacune des deux demi tuyères et moyen d'orientation du vecteur de poussée produite par chacune des deux demi tuyères.

9. Ensemble selon la revendication précédente dont les dits deux moyens sont à injection fluidique (28 ; 29), ou mécaniques.

10. Ensemble selon l'une des revendications 7 et 8 dont les dites demi tuyères sont disposées pour une orientation du vecteur poussée en lacet.

11. Ensemble selon l'une des revendications 7 à 9 dont les dites demi tuyères sont disposées pour un pilotage en tangage.

12. Ensemble selon les revendications 10 et 11 comprenant deux paires de demi tuyères, notamment l'un pour l'orientation en lacet l'autre pour l'orientation en tangage.

13. Ensemble selon la revendication 8 dont le moyen de pilotage de la répartition des flux comprend des moyens (28) d'injection de fluide au col (34C, 36C) de chacune des demi tuyères.

14. Ensemble selon la revendication précédente, le générateur de gaz étant un turboréacteur, dont les moyens (28) d'injection fluidiques sont alimentés par de l'air prélevé au compresseur du générateur.

15. Procédé de fonctionnement de l'ensemble d'échappement selon la revendication précédente comprenant un prélèvement continu au compresseur du générateur.

16. Ensemble selon la revendication 7 ou 8 dont le flux principal est généré par deux générateurs de gaz, et comprenant un moyen d'orientation du vecteur de poussée produit par chacune des deux demi tuyères.

17. Turbomachine comportant un ensemble d'échappement selon l'une des revendications 1 à 14 et 16.

## Claims

1. A propulsion gas exhaust assembly, in an aircraft propelled by hot gases produced along the axis (XX) of the latter by a gas generator, comprising a duct (21 ; 32, 33, 35) and a nozzle (24 ; 34, 36), said duct forming a vertical elbow defined by a first portion guiding the gas flow in a radial direction of the vertical plane away from the axis of the aircraft and a second portion downstream of the first portion guiding the gas flow in a radial direction toward said axis, wherein downstream of the elbow the gas flow is returned to the axis and the axis of the nozzle being parallel, particularly coaxial, to the axis (XX) of the gas flow exiting from the gas generator, the elements of the duct upstream of the elbow not being visible from the rear.

2. The assembly as claimed in the preceding claim whereof the gas generator is a turbojet.

3. The assembly as claimed in one of the preceding claims whereof the cross section of the duct (21 ; 32, 33, 35) is elongate in shape and reduced in height.

4. The assembly as claimed in one of the preceding claims whereof the duct comprises an entrance plane (21A ; 31A) and the nozzle (24 ; 34, 36) a throat plane, distant from the entrance plance by a length Lchannel, and the plane of the elbow, corresponding to the maximum vertical deviation, is situated at a distance from the entrance plane Lelbow such that the ratio Lelbow/Lchannel lies between 0.5 and 0.7.

5. The assembly as claimed in one of the preceding claims whereof the height Hint of the internal wall and the height Hext of the external wall of the elbow relative to the axis of the gas flow, corresponding to the maximum vertical deviation, are in a ratio Hint/Hext ≤ 1/2.

6. The assembly as claimed in claim 5 whereof the ratio Hext/Lchannel is approximately 1/3.

7. The assembly as claimed in one of the preceding claims, whereof the duct comprises successively a first cylindrical duct element (31), a second duct element (32), two third duct element (33, 35), the latter each opening into a half-nozzle (34, 36).

8. The assembly as claimed in one of the preceding claims, shaped so as to divide a main propulsion gas flow into a first (34) and a second (36) flow for an ejection into a first and a second half-nozzle and comprising at least one of the following two controlling means : a means of distributing the main flow into each of the two half-nozzles and a means of orienting the thrust vector produced by each of the two half-nozzles.

9. The assembly as claimed in the preceding claim whereof said two means are fluid injection (28 ; 29) or mechanical.

10. The assembly as claimed in one of claims 7 and 8, whereof said half nozzles are placed for a yaw orientation of the thrust vector.

11. The assembly as claimed in one of claims 7 to 9, whereof said half nozzles are palced for a pitch control.

12. The assembly as claimed in one of claims 10 and 11, comprising two pairs of half-nozzles, particularly one for the yaw orientation, the other for the pitch orientation.

13. The assembly as claimed in claim 8, whereof the means for controlling the distribution of the flows comprises means (28) for fluid injection at the throat (34C, 36C) of each of the half-nozzles.

14. The assembly as claimed in the preceding claim, the gas generator being a turbojet, whereof the fluid (28) injection means are supplied by the air tapped from the compressor of the generator.

15. A method of operating the exhaust assembly as claimed in the preceding claim comprising a continuous tapping from the compressor of the generator.

16. The assembly as claimed in claim 7 or 8, whereof the main is generated by two gas generators, and comprising a means of orienting the thrust vector produced by each of the two half-nozzles.

17. A turbomachine comprising an exhaust assembly as claimed in one of claims 1 to 14 and 16.

## Patentansprüche

1. Ausstoßvorrichtung für die Antriebsgase bei einem Luftfahrzeug, das durch heiße Gase angetrieben wird, die auf dessen Achse (XX) von einem Gasgenerator erzeugt werden, bestehend aus einer Leitung (21; 32, 33, 35) und einer Düse (24; 34, 36), wobei diese Leitung eine vertikalen Bogen macht, der durch einen ersten Teil definiert ist, der den Gasstrom in einer radialen Richtung der vertikalen Ebene führt, die sich von der Achse des Luftfahrzeugs entfernt, und wobei ein hinter dem ersten Teil befindlicher zweiter Teil den Gasstrom in einer radialen Richtung zu dieser Achse hin führt,
**dadurch gekennzeichnet,**
**dass** der Gasstrom hinter dem Bogen auf der Achse geführt wird, indem die Achse der Düse parallel und insbesondere koaxial zu der Achse (XX) des Gasstroms am Austritt aus dem Gasgenerator verläuft, wobei die Elemente der Leitung vor dem Bogen von hinten nicht zu sehen sind.

2. Vorrichtung nach dem vorherigen Anspruch, wobei der Gasgenerator ein Turboluftstrahltriebwerk ist.

3. Vorrichtung nach einem der vorherigen Ansprüche, wobei der Querschnitt der Leitung (21; 32, 33, 35) länglich geformt ist und eine geringe Höhe aufweist.

4. Vorrichtung nach einem der vorherigen Ansprüche, wobei die Leitung eine Eintrittsebene (21A; 31A) aufweist und die Düse (24; 34, 36) eine Düsenhals-Ebene aufweist, die von der Eintrittsebene um eine Strecke Lcanal entfernt liegt, und die Ebene des Bogens, die der maximalen vertikalen Ablenkung entspricht, sich in einer solchen Entfernung von der Eintrittsebene Lcoude befindet, dass das Verhältnis Lcoude/Lcanal zwischen 0,5 und 0,7 beträgt.

5. Vorrichtung nach einem der vorherigen Ansprüche, wobei die Höhe Hint der Innenwand und die Höhe Hext der Außenwand des Bogens, bezogen auf die Achse des Gasstroms, die der maximalen vertikalen Ablenkung entspricht, sich in einem Verhältnis von Hint/Hext <= 1/2 befinden.

6. Vorrichtung nach Anspruch 5, wobei das Verhältnis von Hext/Lcanal ca. 1/3 beträgt.

7. Vorrichtung nach einem der vorherigen Ansprüche, wobei die Leitung nacheinander ein erstes zylindrisches Leitungselement (31), ein zweites Leitungselement (32), zwei dritte Leitungselemente (33, 35) umfasst, wobei die Letzteren jeweils in eine Halbdüse (34, 36) münden.

8. Vorrichtung nach einem der vorherigen Ansprüche, die so ausgeführt ist, dass ein Haupt-Antriebsgasstrom in einen ersten und einen zweiten Strom unterteilt wird, um in einer ersten Halbdüse (34) und einer zweiten Halbdüse (36) ausgestoßen zu werden, und die mindestens eines der beiden folgenden Steuermittel enthält: Mittel zum Verteilen des Hauptstroms auf jede der beiden Halbdüsen und Mittel zur Ausrichtung des Vektors des von jeder der beiden Halbdüsen erzeugten Schubes.

9. Vorrichtung nach dem vorherigen Anspruch, wobei die genannten beiden Mittel mit Fluidik-Einspritzung (28; 29) oder mechanisch funktionieren.

10. Vorrichtung nach einem der Ansprüche 7 und 8, wobei die genannten Halbdüsen für eine Ausrichtung des Schubvektors in einer Schleife angeordnet sind.

11. Vorrichtung nach einem der Ansprüche 7 und 8, wobei die genannten Halbdüsen für eine Steuerung in einer Nickschwingbewegung angeordnet sind.

12. Vorrichtung nach den Ansprüchen 10 und 11, die zwei Paare von Halbdüsen aufweist, insbesondere das eine für die Ausrichtung in einer Schleife, die andere für die Ausrichtung in einer Nickschwingbewegung.

13. Vorrichtung nach Anspruch 8, wobei das Mittel zur Steuerung der Verteilung der Ströme Mittel (28) zum Einspritzen von Fluid in den Hals (34C, 36C) jeder der Halbdüsen umfasst.

14. Vorrichtung nach dem vorherigen Anspruch, wobei der Gasgenerator ein Turboluftstrahltriebwerk ist, dessen Fluidik-Einspritzmittel (28) mit Luft gespeist werden, die am Verdichter des Generators entnommen wird.

15. Arbeitsverfahren der Ausstoßvorrichtung nach dem vorherigen Anspruch, das eine kontinuierliche Entnahme am Verdichter des Generators beinhaltet.

16. Vorrichtung nach Anspruch 7 oder 8, bei der der Hauptstrom von zwei Gasgeneratoren erzeugt wird, und die ein Mittel zur Ausrichtung des von jeder der beiden Halbdüsen erzeugten Schubvektors umfasst.

17. Turboluftstrahltriebwerk mit einer Ausstoßvorrichtung nach einem der Ansprüche 1 bis 14 und 16.
